# EUROPÄISCHE PATENTANMELDUNG

(11) **EP 4 549 287 A1**
(43) Veröffentlichungstag der Anmeldung: **07.05.2025**
(21) Anmeldenummer: 24203671.3
(22) Anmeldetag: 30.09.2024
(51) Int. Cl.: B62D 5/04, B62D 5/00

(54) **ELEKTROMECHANISCHES LENKSYSTEM UND VERFAHREN ZUM BETREIBEN EINES ELEKTROMECHANISCHEN LENKSYSTEMS MIT REIBUNGSÜBERWACHUNG**

(30) Priorität: 05.10.2023 BE 202305822
(71) Anmelder: thyssenkrupp Presta Aktiengesellschaft, 9492 Eschen (LI); thyssenkrupp AG, 45143 Essen (DE)
(72) Erfinder: Dömötör, Krisztián, 8900 Zalaegerszeg (HU); Kakas, Peter, 1118 Budapest (HU)
(74) Vertreter: thyssenkrupp Intellectual Property GmbH

(57) **Zusammenfassung**

Die vorliegende Erfindung betrifft ein Verfahren zum Betreiben eines elektromechanischen Lenksystems (1) mit einer Lenkwelle (2), über die mittels einer Lenkhandhabe (3) ein Lenkbefehl vorgegeben werden kann, und mit einem Lenkgetriebe (8), das einen Lenksteller (9) mit einer Aktuatoreinheit (10) und ein Koppelelement (12) aufweist, wobei zur Umsetzung eines Lenkbefehls in eine Lenkbewegung von lenkbaren Rädern (14) eines Kraftfahrzeugs ein Steuersignal (S1) an die Aktuatoreinheit (10) des Lenkstellers (9) gesendet wird, die Aktuatoreinheit (10) das empfangene Steuersignal (S1) in eine mechanische Bewegung des Lenkstellers (9) umsetzt, indem der Lenksteller (9) auf das Koppelelement (12) einwirkt, wobei eine interne Reibung des Lenkgetriebes (8) überwacht wird, und wobei bei einem Erkennen einer Erhöhung der internen Reibung ein Zusatzsteuersignal (S2) an die Aktuatoreinheit (10) gesendet wird. Vorteilhafterweise wirkt die durch das Zusatzsteuersignal (S2) bewirkte Bewegung der Erhöhung der internen Reibung entgegen, insbesondere einer durch Einfrieren des Lenkgetriebes erhöhten internen Reibung.

Ferner betrifft die Erfindung ein elektromechanisches Lenksystem (1), das für einen Betrieb nach einem solchen Verfahren ausgebildet ist.

## Beschreibung

Die Erfindung betrifft ein elektromechanisches Lenksystem mit einer Lenkwelle, über die mittels einer Lenkhandhabe ein Lenkbefehl vorgegeben werden kann, und mit einem Lenkgetriebe, das einen mittels einer Aktuatoreinheit antreibbaren Lenksteller und ein Koppelelement aufweist, wobei der Lenksteller ausgebildet ist, zur Umsetzung eines Lenkbefehls in eine Lenkbewegung von lenkbaren Rädern eines Kraftfahrzeugs gemäß einem empfangenen Steuersignal auf das Koppelelement einzuwirken. Des Weiteren betrifft die Erfindung ein Verfahren zum Betreiben eines solchen elektromechanischen Lenksystems, wobei zur Umsetzung eines Lenkbefehls in eine Lenkbewegung von lenkbaren Rädern eines Kraftfahrzeugs ein Steuersignal an die Aktuatoreinheit des Lenkstellers gesendet wird, die Aktuatoreinheit das empfangene Steuersignal in eine mechanische Bewegung des Lenkstellers umsetzt, wobei der Lenksteller auf das Koppelelement einwirkt, und wobei eine interne Reibung des Lenkgetriebes überwacht wird.

Im Stand der Technik sind elektromechanische Lenksystem und Verfahren zum Betreiben von elektromechanischen Lenksystemen, wobei eine interne Reibung des Lenkgetriebes überwacht wird, bekannt. So offenbart beispielsweise die DE 11 2017 003 824 T5 eine Erkennung von hoher Reibung in einem Lenkgetriebe aufgrund von Rost. Die DE 10 2010 002 803 A1 beschäftigt sich insbesondere mit der Problematik des Einfrierens einer Hilfskraftlenkung durch eingedrungenes Wasser, wobei eine solche Beeinträchtigung durch eine Auswertung von Drehzahlmustern des Motors erkannt werden soll. Die DE 10 2014 113 614 B3 schlägt für den gleichen Zweck vor, zusätzlich zu prüfen, ob eine Umfangskraft, die an der Komponente anliegt, in einem Bereich eines Anstiegs einer Drehzahl des Motors über einer bestimmten Grenze liegt. Für die Erkennung einer erhöhten Reibung in servounterstützten Zahnstangenlenkungen sieht die DE 10 2014 201 952 A1 die Generierung eines Teststroms vor, mit dem der Servomotor beaufschlagt wird, wobei eine durch den Teststrom bewirkte Positionsänderung des Rotors erfasst und mit einer Sollvorgabe verglichen wird. Die DE 10 2019 208 083 A1 offenbart ein Korrosionsdetektionssystem für die Erkennung von Korrosion in einem Lenksystem, wobei hierzu auch eine veränderte interne Reibung für das Vorliegen von Korrosion zugrunde gelegt wird. Ein Verfahren zum Erkennen interner Reibung in einem elektrischen Lenksystem wird in der DE 10 2009 026 497 B4 beschrieben, wobei ein Lenksäulendrehmoment mit einem zugeordneten Grenzwert verglich wird. Die Vielzahl unterschiedlicher Ansätze zur Überwachung einer internen Reibung zeigt, dass die existierenden Lösungen nicht vollständig überzeugend sind, insbesondere im Hinblick auf den Umgang eines erkannten Überschreitens eines vorgegebenen Grenzwertes, und es einen weiteren Bedarf an neuen Lösungsansätzen gibt.

Vor diesem Hintergrund ist es eine Aufgabe der vorliegenden Erfindung, ein eingangs genanntes elektromechanisches Lenksystem und ein eingangs genanntes Verfahren zum Betreiben eines elektromechanischen Lenksystems zu verbessern, wobei vorteilhafterweise einer erhöhten internen Reibung entgegengewirkt wird.

Zur Lösung dieser Aufgabe werden ein Verfahren gemäß Anspruch 1 sowie ein elektromechanisches Lenksystem gemäß dem nebengeordneten Anspruch vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein Verfahren zum Betreiben eines elektromechanischen Lenksystems mit einer Lenkwelle, über die mittels einer Lenkhandhabe ein Lenkbefehl vorgegeben werden kann, und mit einem Lenkgetriebe, das einen Lenksteller mit einer Aktuatoreinheit und ein Koppelelement aufweist, vor, wobei zur Umsetzung eines Lenkbefehls in eine Lenkbewegung von lenkbaren Rädern eines Kraftfahrzeugs ein Steuersignal an die Aktuatoreinheit des Lenkstellers gesendet wird, die Aktuatoreinheit das empfangene Steuersignal in eine mechanische Bewegung des Lenkstellers umsetzt, indem der Lenksteller auf das Koppelelement einwirkt, und wobei eine interne Reibung des Lenkgetriebes überwacht wird. Insbesondere hat dabei ein betätigtes Drehmoment der Aktuatoreinheit eine feste Beziehung zu einer Änderung der Position des Koppelelements. Erfindungsgemäß wird bei einem Erkennen einer Erhöhung der internen Reibung ein Zusatzsteuersignal an die Aktuatoreinheit gesendet. Durch das Zusatzsteuersignal wird dabei vorteilhafterweise einerseits eine Möglichkeit bereitgestellt, eine Bewegung auf die Komponenten des Lenkgetriebes auszuüben, wodurch vorteilhafterweise einer Erhöhung der internen Reibung, insbesondere einer Erhöhung der internen Reibung durch ein Einfrieren, entgegengewirkt werden kann. So ist insbesondere vorgesehen, dass bei einem Einfrieren des Lenkgetriebes auf eine Erhöhung der internen Reibung erkannt wird. Vorteilhafterweise bietet das Zusatzsteuersignal darüber hinaus die Möglichkeit, eine Erhöhung der internen Reibung weiter auszuwerten und somit einen Grad einer Degradation des Lenkgetriebes verbessert zu erkennen. Die Aktuatoreinheit des Lenkstellers ist insbesondere ein Elektromotor, weiter insbesondere ein Permanentmagnet-Synchronmotor. Der Elektromotor wirkt dabei vorzugsweise auf ein Lenkritzel, das vorteilhafterweise auf ein als Zahnstange ausgebildetes Koppelelement wirkt.

Insbesondere ist vorgesehen, dass das Zusatzsteuersignal ergänzend zu dem Steuersignal an die Aktuatoreinheit gesendet wird. Vorteilhafterweise werden also sowohl das Steuersignal, das originär zur Umsetzung eines erfassten Lenkbefehls gesendet wurde, als auch das Zusatzsteuersignal an die Aktuatoreinheit, insbesondere an den Elektromotor, gesendet. Dabei kann insbesondere vorgesehen sein, dass das Steuersignal und das Zusatzsteuersignal sequenziell, also nacheinander an die Aktuatoreinheit gesendet wird. Insbesondere kann das Zusatzsteuersignal völlig losgelöst von dem Steuersignal an die Aktuatoreinheit übertragen werden. Das Zusatzsteuersignal kann insbesondere auch als eine Folge von Signalen ausgebildet sein.

Eine vorteilhafte Ausgestaltungsvariante des Verfahrens sieht aber insbesondere auch vor, dass das Steuersignal mit dem Zusatzsteuersignal überlagert wird. Die Überlagerung kann insbesondere additiv erfolgen. Gemäß einer vorteilhaften Ausgestaltung ist das Zusatzsteuersignal dabei derart ausgebildet, dass dieses der erkannten Erhöhung der internen Reibung entgegenwirkt. Insbesondere ist dabei vorgesehen, dass das Steuersignal so generiert wird, als läge die interne Reibung in einem üblichen Normalbereich, wobei durch das Zusatzsteuersignal das Steuersignal so verändert wird, dass eine erhöhte Reibung kompensiert wird. Vorteilhafterweise bleibt eine erhöhte Reibung so für das Lenkgefühl eines Fahrzeugnutzers unbemerkt. Besonders vorteilhaft bewirkt das Zusatzsteuersignal aber insbesondere eine zusätzliche Ansteuerung der Aktuatoreinheit derart, dass die Komponenten des Lenkgetriebes mehr bewegt werden, als dies bei ausschließlicher Verwendung des Steuersignals der Fall wäre, wodurch vorteilhafterweise einer Erhöhung der Viskosität von Schmiermitteln aufgrund niedriger Außentemperaturen und/oder einem Vereisen entgegengewirkt werden kann. Vorteilhafterweise wird die Auswirkung des Zusatzsteuersignals durch die Überlagerung des Zusatzsteuersignals mit dem Steuersignal für einen Fahrzeugnutzer nicht wahrnehmbar in der durch das Steuersignal hervorgerufenen Bewegung oder Bewegungsfolge "versteckt". Vorteilhafterweise ist also vorgesehen, dass das Zusatzsteuersignal ein Bewegungssteuersignal ist, das von der Aktuatoreinheit in eine für das Lenken des Kraftfahrzeugs einflussfreie mechanische Zusatzbewegung, insbesondere eine Zusatzbewegungsfolge, des Lenkstellers umgesetzt wird.

Gemäß einer vorteilhaften Weiterbildung ist die Zusatzbewegung geringer als ein Spiel des Lenksystems. Vorteilhafterweise wird so weiter Sorge dafür getragen, dass eine durch das Zusatzsteuersignal verursachte Zusatzbewegung durch einen Fahrzeugnutzer nicht wahrnehmbar ist, und ein Fahrzeugnutzer insofern hierdurch insbesondere nicht irritiert wird. Hierzu kann insbesondere weiter dadurch beigetragen werden, dass die Zusatzbewegung geringer ist als ein Spiel der Lenkhandhabe des Lenksystems.

Eine weitere vorteilhafte Ausgestaltung sieht vor, dass das Zusatzsteuersignal ein Drehmomentsteuersignal ist, das vorteilhafterweise von der Aktuatoreinheit in ein für das Lenken des Kraftfahrzeugs einflussfreies Zusatzdrehmoment des Lenkstellers umgesetzt wird. Es kann aber vorgesehen werden, dass durch dieses Drehmomentsteuersignal eine erhöhte innere Reibung auch zumindest teilweise ausgeglichen wird, sodass durch das Zusatzsteuersignal ein Lenken zwar als unverändert gegenüber dem Normalfall mit normaler interner Reibung wahrgenommen wird, aber durch das Zusatzsteuersignal das Lenken für den Fall einer hohen inneren Reibung durchaus positiv beeinflusst wird, weil das Lenken wie gewohnt, also wie im Fall ohne erhöhte innere Reibung, von einem Fahrzeugnutzer wahrgenommen wird.

Weiter vorteilhaft wird das Zusatzsteuersignal als Sinussignal und/oder Dreieckssignal und/oder Rechtecksignal bereitgestellt. Vorteilhafterweise ist ein solches Signal einfach erzeugbar. Zudem kann ein solches Signal einfach so ausgestaltet werden, dass hierdurch für den Fahrzeugnutzer kein spürbarer Einfluss auf das Lenkverhalten hervorgerufen wird.

Gemäß einem weiteren vorteilhaften Aspekt wird zur Überwachung der internen Reibung des Lenkgetriebes bei einer Bewegung der Lenkhandhabe das Verhalten der Aktuatoreinheit ausgewertet. Gibt ein Fahrzeugnutzer über die Lenkhandhabe einen Lenkbefehl vor, und wir entsprechend ein Steuersignal für die Aktuatoreinheit generiert, so wird vorteilhafterweise geprüft, ob die Aktuatoreinheit vorbestimmte Sollvorgaben und/oder Sollschwellwerte einhält. Ist das nicht der Fall, so wird vorteilhafterweise auf eine Erhöhung der internen Reibung erkannt.

Als vorteilhafte Weiterbildung ist insbesondere vorgesehen, dass das Zusatzsignal, das insbesondere auch ein weiteres Zusatzsignal sein kann, bei einer lenkbewegungsfreien Fahrt, die insbesondere länger als eine vorbestimmte Zeitspanne dauert, erzeugt wird, wobei zur Überwachung der internen Reibung des Lenkgetriebes das Verhalten der Aktuatoreinheit auf die Ansteuerung mittels des Zusatzsignals ausgewertet wird. Das Zusatzsignal beziehungsweise das weitere Zusatzsignal wird in dem Fall vorteilhafterweise auch erzeugt und an die Aktuatoreinheit gesendet, wenn noch keine Erhöhung einer internen Reibung erkannt ist. Das Zusatzsignal beziehungsweise das weitere Zusatzsignal wird dabei vorteilhafterweise eingesetzt, um eine Erhöhung einer internen Reibung zu erkennen. Insbesondere wird zur Erkennung einer Erhöhung einer internen Reibung bei Ansteuerung der Aktuatoreinheit mit dem Zusatzsignal beziehungsweise dem weiteren Zusatzsignal geprüft, ob das durch die Ansteuerung hervorgerufene Verhalten der Aktuatoreinheit vorbestimmte Sollvorgaben und/oder Sollschwellwerte einhält. Ist das nicht der Fall, so wird vorteilhafterweise auf eine Erhöhung der internen Reibung erkannt. Vorteilhafterweise ist das Zusatzsignal beziehungsweise das weitere Zusatzsignal, das zur Erkennung einer Erhöhung einer internen Reibung an die Aktuatoreinheit gesendet wird, ein Sinussignal und/oder ein Dreieckssignal und/oder ein Rechtecksignal, wobei das Zusatzsignal beziehungsweise das weitere Zusatzsignal insbesondere auch eine Signalfolge sein kann.

Insbesondere ist vorgesehen, dass das Verhalten der Aktuatoreinheit, insbesondere das durch das Steuersignal und/oder das Zusatzsteuersignal hervorgerufene Verhalten der Aktuatoreinheit, bezüglich einer Änderung eines von der Aktuatoreinheit bereitgestellten Drehmoments unter Berücksichtigung einer dabei bewirkten Positionsänderung des Koppelelements ausgewertet wird; insbesondere im Vergleich zu einer Sollvorgabe. Insbesondere kann dabei ein Schwellwertvergleich mit entsprechenden Sollwerten erfolgen, um eine Erhöhung der internen Reibung zu erkennen. Vorteilhafterweise führt diese Auswertung zu dem Ergebnis, dass eine interne Reibung nicht erhöht ist oder erhöht ist.

Das des Weiteren zur Lösung der eingangs genannten Aufgabe vorgeschlagene elektromechanische Lenksystem umfasst eine Lenkwelle, über die mittels einer Lenkhandhabe ein Lenkbefehl vorgegeben werden kann, und ein Lenkgetriebe, das einen mittels einer Aktuatoreinheit antreibbaren Lenksteller und ein Koppelelement aufweist, wobei der Lenksteller ausgebildet ist, zur Umsetzung eines Lenkbefehls in eine Lenkbewegung von lenkbaren Rädern eines Kraftfahrzeugs gemäß einem empfangenen Steuersignal auf das Koppelelement einzuwirken. Das Lenksystem ist zudem ausgebildet, nach einem erfindungsgemäß ausgebildeten Verfahren betrieben zu werden. Das Lenksystem ist insofern insbesondere dazu ausgebildet, dass zur Umsetzung eines Lenkbefehls in eine Lenkbewegung von lenkbaren Rädern eines Kraftfahrzeugs ein Steuersignal an die Aktuatoreinheit des Lenkstellers gesendet werden kann, insbesondere von einer dem Lenksystem zugeordneten Steuereinheit. Die Aktuatoreinheit des Lenksystems ist insbesondere ausgebildet, das empfangene Steuersignal in eine mechanische Bewegung des Lenkstellers umzusetzen, wobei der Lenksteller insbesondere ausgebildet ist, auf das Koppelelement einzuwirken. Weiter ist das Lenksystem, insbesondere die dem Lenksystem zugeordnete Steuereinheit, ausgebildet, eine interne Reibung des Lenkgetriebes zu überwachen und bei einem Erkennen einer Erhöhung der internen Reibung ein Zusatzsteuersignal an die Aktuatoreinheit zu senden.

Weiter vorteilhaft umfasst das elektromechanische Lenksystem eine Steuereinheit, insbesondere die dem Lenksystem zugeordnete Steuereinheit, wobei die Steuereinheit vorteilhafterweise dazu eingerichtet ist, das Lenksystem nach einem erfindungsgemäßen Verfahren zu betreiben. Die Steuereinheit ist dabei insbesondere dazu ausgebildet, die vorstehend im Zusammenhang mit dem vorgeschlagenen Verfahren erläutertem vorteilhaften Verfahrensschritte einzeln oder in einer beliebigen geeigneten Kombination beim Betreiben des Lenksystems auszuführen beziehungsweise ausführen zu lassen.

Gemäß einem weiteren vorteilhaften Aspekt ist das elektromechanische Lenksystem ein Steer-by-Wire-Lenksystem.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigt:
- Fig. 1: in einer vereinfachten perspektivischen Darstellung ein Ausführungsbeispiel für ein erfindungsgemäß ausgebildetes elektromechanisches Lenksystem;
- Fig. 2: ein Blockschaltbild zur Erläuterung eines Ausführungsbeispiels für ein erfindungsgemäß ausgebildetes Verfahren;
- Fig. 3: ein weiteres Blockschaltbild zur Erläuterung eines weiteren Ausführungsbeispiels für ein erfindungsgemäß ausgebildetes Verfahren; und
- Fig. 4: ein Ausführungsbeispiel für ein Zusatzsignal, dass bei der Ausführung eines erfindungsgemäß ausgebildeten Verfahrens generiert und an die wird.

In den verschiedenen Figuren sind gleiche Teile in der Regel mit den gleichen Bezugszeichen versehen und werden daher mitunter auch jeweils nur im Zusammenhang mit einer der Figuren erläutert.

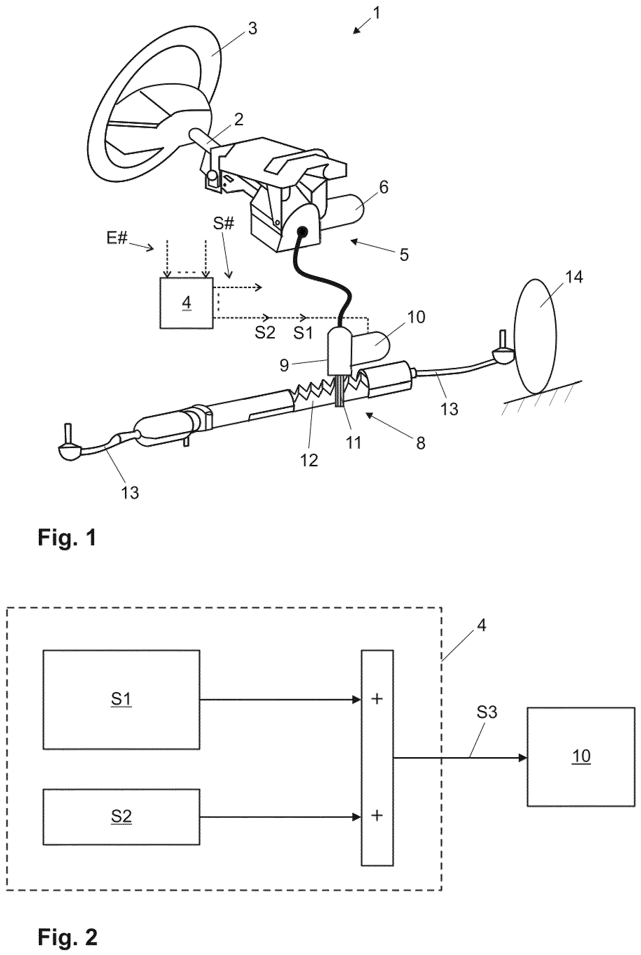

In Fig. 1 ist ein Ausführungsbeispiel für ein erfindungsgemäß ausgebildetes elektromechanisches Lenksystem 1 dargestellt, das in diesem Ausführungsbeispiel als Steer-by-Wire-Lenksystem für ein Kraftfahrzeug ausgebildet ist. Das Steer-by-Wire-Lenksystem 1 umfasst eine Lenksäule mit einer Lenkwelle 2 und einem Feedback-Aktuator 5. An einem Ende der Lenkwelle 2 ist eine als Lenkrad ausgebildete Lenkhandhabe 3 drehfest angeordnet. Über die Lenkhandhabe 3 kann ein Fahrzeugnutzer einen Lenkbefehl vorgeben. Der Feedback-Aktuator 5 ist ausgebildet, ein Drehmoment beziehungsweise ein Lenkwiderstands-Drehmoment auf die Lenkwelle 2 auszuüben, insbesondere zur Vermittlung eines Lenkgefühls. Dieses Lenkwiderstands-Drehmoment ist von einem Fahrzeugnutzer des Kraftfahrzeugs über die Lenkhandhabe 3 als Lenkwiderstand wahrnehmbar.

Die Lenkhandhabe 3 des Steer-by-Wire-Lenksystems 1 lässt sich in bekannter Weise drehen, um einen Lenkbefehl in die Lenkwelle 2 einzubringen, der sensorisch erfasst wird. Dazu kann das Steer-by-Wire-Lenksystem 1 insbesondere eine in Fig. 1 nicht näher dargestellte Winkelsensoreinheit umfassen, die ausgebildet ist, einen mittels der Lenkhandhabe 3 eingestellten Winkel als Lenkwinkel der Lenkwelle 2 zu erfassen.

Zudem umfasst das Steer-by-Wire-Lenksystem 1 ein Lenkgetriebe mit einem Lenksteller 9 und einem Koppelelement 12. Der Lenksteller 9 umfasst in diesem Ausführungsbeispiel ein Lenkritzel 11 und einen das Lenkritzel 11 antreibenden Elektromotor 10 als Aktuatoreinheit. Durch entsprechende Ansteuerung des Elektromotors 10 wird das Lenkritzel 11 zur Umsetzung eines Lenkbefehls in eine Lenkbewegung der lenkbaren Räder 14 von dem Elektromotor 10 angetrieben. Dabei wirkt der Lenksteller 9 mittels des Elektromotors 10 über das Lenkritzel 11 auf das als Zahnstange ausgebildete Koppelelement 12 und löst so eine Lenkbewegung der lenkbaren Räder 14 eines Kraftfahrzeugs aus, die insbesondere über Spurstangen 13 mit dem Koppelelement 12 verbunden sind. Die Spurstangen 13 selbst sind in bekannter Weise über Achsschenkel mit je einem gelenkten Rad 14 verbunden.

Weiter umfasst das Steer-by-Wire-Lenksystem 1 eine Steuereinheit 4, die insbesondere als ECU (ECU: electronic control unit) ausgebildet ist. Diese Steuereinheit 4 ist vorteilhafterweise zur Steuerung des Feedback-Aktuators 5 und zur Steuerung des Lenkstellers 9 ausgebildet. Dazu empfängt die Steuereinheit 4 eine Mehrzahl von Eingangssignalen E#, beispielsweise ein von der Winkelsensoreinheit bereitgestelltes Sensorsignal. Darüber hinaus ist insbesondere vorgesehen, das die Steuereinheit 4 als weitere Eingangssignale E# Sensorsignale von jeweils wenigstens einer Drehmomentsensoreinheit, insbesondere einer Drehmomentsensoreinheit zur Bestimmung eines von einem Elektromotor 6, 10 bereitgestellten Drehmoments, und/oder wenigstens einer Rotorpositionssensoreinheit, insbesondere einer Rotorpositionssensoreinheit zur Bestimmung einer Rotorposition eines Rotors von einem Elektromotor 6, 10, und/oder wenigstens Positionssensoreinheit, insbesondere eine Positionssensoreinheit zur Bestimmung der Position der Koppelstange 12.

Die Steuereinheit 4 erzeugt dabei eine Mehrzahl von Steuersignalen S#, insbesondere zur Steuerung des Feedback-Aktuators 5 und zur Steuerung des Lenkstellers 9, wobei der Lenksteller 9 ausgebildet ist, zur Umsetzung eines Lenkbefehls in eine Lenkbewegung der lenkbaren Räder 14 auf das Koppelelement 12 einzuwirken. Die Steuereinheit 4 sendet dazu ein Steuersignal S1 an den Elektromotor 10 des Lenkstellers 9, wobei der Elektromotors 10 das empfangene Steuersignal S1 in eine mechanische Bewegung des Lenkritzels 11 des Lenkstellers 9 umsetzt, wobei der Lenksteller 9 über das Lenkritzel 11 gemäß dem empfangenen Steuersignal S1 auf das Koppelelement 12 einwirkt. Die Steuereinheit 4 ist dabei weiter eingerichtet bei einem Betrieb des Steer-by-Wire-Lenksystems 1 unter Auswertung von erfassten Lenksystemparametern eine interne Reibung des Lenkgetriebes 8 zu überwachen. Hierdurch soll vorteilhafterweise erkannt werden, wenn ein Einfrieren des Lenkgetriebes 8 droht. Wird dabei von der Steuereinheit 4 eine Erhöhung der internen Reibung erkannt, wird ein Zusatzsteuersignal S2 an den Elektromotor 10 des Lenkstellers 9 gesendet. Insbesondere kann bei einer erkannten Erhöhung der internen Reibung auch ein Warnsignal an den Fahrzeugnutzer ausgegeben werden.

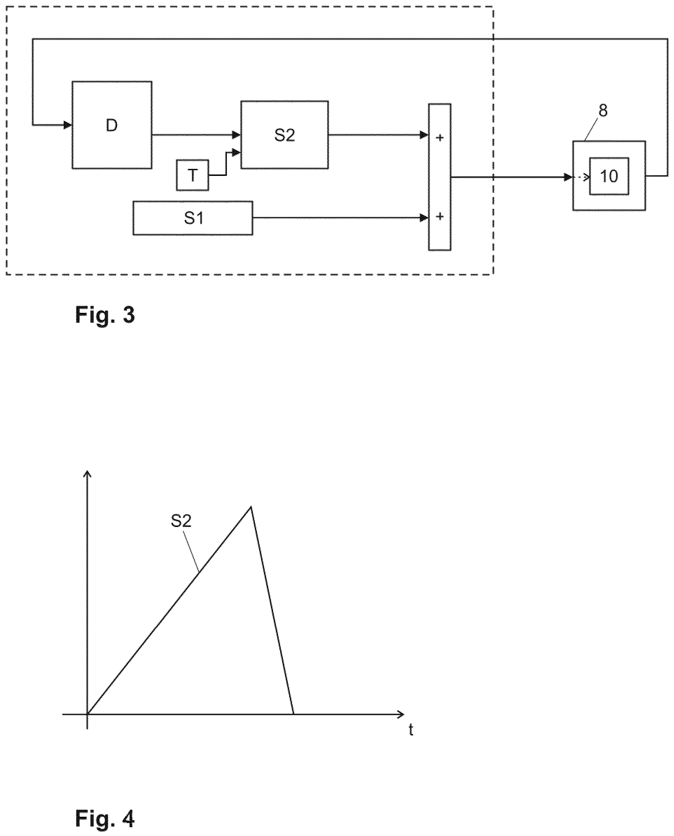

Durch das an den Elektromotor 10 gesendete Zusatzsteuersignal S2 wird der Elektromotor 10 des Lenkstellers 9 so angesteuert, dass eine für das Lenken des Kraftfahrzeugs einflussfreie mechanische Zusatzbewegung des Lenkstellers 9 und somit eine mechanische Zusatzbewegung in dem Lenkgetriebe 8 erzeugt wird. Diese Zusatzbewegung wirkt dabei einer Erhöhung der internen Reibung des Lenkgetriebes 8, insbesondere einem Einfrieren des Lenkgetriebes 8, entgegen. Insbesondere kann das Zusatzsteuersignal S3 eine Folge von Dreieckssignalen sein, die somit zu geringen Bewegungen innerhalb des Lenkgetriebes 8 führen, die aber so gering sind, dass diese sich aufgrund eines Spiels der Lenkhandhabe 3 für den Fahrzeugnutzer nicht bemerkbar machen. Ein Beispiel für ein Zusatzsteuersignal S2 ist beispielhaft in Fig. 4 als Positionsänderung oder Drehmomentänderung über der Zeit t dargestellt. Das Zusatzsteuersignal S2 ist insofern insbesondere ein Drehmomentsteuersignal, das von dem Elektromotor 10 in ein für das Lenken des Kraftfahrzeugs einflussfreies Zusatzdrehmoment des Lenkstellers 9 umgesetzt wird, oder ein Positionssteuersignal, das von dem Elektromotor 10 in eine für das Lenken des Kraftfahrzeugs einflussfreie Positionsänderung des Koppelelements 12 umgesetzt wird. Im Falle einer Positionsänderung ist diese insbesondere kleiner als ein Spiel der Lenkhandhabe 5, sodass die durch das Zusatzsteuersignal S2 hervorgerufene Positionsänderung für den Fahrzeugnutzer nicht über die Lenkhandhabe 3 wahrnehmbar ist.

Eine vorteilhafte Ausgestaltungsvariante zum Betreiben des elektromechanischen Lenksystems 1 ist in Fig. 2 skizziert. Diese Ausgestaltungsvariante sieht vor, dass das von der Steuereinheit 4 generiert Zusatzsteuersignal S2 ergänzend zu dem von der Steuereinheit 4 generierten Steuersignal S1 an den Elektromotor 10 des Lenkstellers 9 gesendet wird, wenn ein erfasster Lenkbefehl von dem Lenksystem 1 mit dem Steuersignal S1 umgesetzt wird. Bei dieser Ausgestaltungsvariante wird das Steuersignal S1 mit dem Zusatzsteuersignal S2 überlagert, was noch innerhalb der Steuereinheit 4 passiert. Die Steuereinheit 4 sendet dann das neue Steuersignal S3, das aus der Überlagerung von dem Steuersignal S1 und dem Zusatzsteuersignal S2 resultiert, an den Elektromotor 10.

Eine weitere vorteilhafte Ausgestaltungsvariante für ein Verfahren zum Betreiben des elektromechanischen Lenksystems 1 ist in Fig. 3 skizziert. Auch bei dieser Ausgestaltungsvariante wird zur Umsetzung eines Lenkbefehls in eine Lenkbewegung der lenkbaren Rädern 14 eines Kraftfahrzeugs von der Steuereinheit 4 unter Auswertung von Sensorsignalen bezüglich eines von einem Fahrzeugnutzer über die Lenkhandhabe 3 eingebrachten Lenkbefehls ein Steuersignal S1 an den Elektromotor 10 des Lenkstellers 9 gesendet, wobei der Elektromotor 10 entsprechend dem empfangenen Steuersignal S1 eine mechanische Bewegung des Lenkritzels 11 des Lenkstellers 9 erzeugt. Das Lenkritzel 11 des Lenkstellers 9 greift dabei in die Zähne der Zahnstange 12 ein und setzt so den Lenkbefehl über eine Verschiebung der Zahnstange 12 in eine Lenkbewegung der Räder 14 um. Zusätzlich zu dieser Ansteuerung des Lenkstellers 9 überwacht die Steuereinheit 4 eine interne Reibung des Lenkgetriebes 8, insbesondere eine durch ein einsetzendes Vereisen des Lenkgetriebes 8 Erhöhung der internen Reibung. Dazu ist vorgesehen, dass von der Steuereinheit 4 durch eine Vorgabe T ein Zusatzsteuersignal S2 erzeugt wird. Die Vorgabe T kann dabei insbesondere abhängig von einer erfassten Temperatur, insbesondere einer erfassten Temperatur kleiner 5 °C und/oder dem Ablauf einer vorbestimmten Zeitspanne und/oder einer Geradeausfahrt, also einer lenkbewegungsfreien Fahrt, und/oder weiteren Parametern. Das Zusatzsteuersignal S2 kann insbesondere wie in Fig. 4 dargestellt ausgebildet sein. Alternativ dazu kann das Zusatzsteuersignal S2 insbesondere auch als Sinussignal oder Rechtecksignal ausgebildet sein.

Das durch die Vorgabe T erzeugte Zusatzsignal S2 wird an den Elektromotor 10 des Lenkstellers 9 gesendet, wobei zur Überwachung der internen Reibung des Lenkgetriebes 8 das Verhalten des Lenksystems 8, insbesondere das Verhalten des Elektromotors 10 des Lenkstellers 9, auf die Ansteuerung mittels des Zusatzsignals S2 ausgewertet wird. Zusätzlich oder alternativ kann vorgesehen sein, dass zur Überwachung der internen Reibung des Lenkgetriebes 8 bei einer Bewegung der Lenkhandhabe 3 und somit der normalen Generierung des Steuersignals S1 das Verhalten des Lenksystems 8, insbesondere das Verhalten des Elektromotors 10 des Lenkstellers 9, auf die Ansteuerung mittels des Steuersignals S1 ausgewertet wird.

Das Verhalten des Lenksystems 8 auf eine Ansteuerung mit dem Zusatzsteuersignal S2 oder dem Steuersignals S1 wird insbesondere bezüglich einer Änderung eines von dem Elektromotor 10 bereitgestellten Drehmoments unter Berücksichtigung einer dabei bewirkten Positionsänderung des Koppelelements 12 ausgewertet. Durch Schwellwertvergleiche, denen vorbestimmte Sollwertvorgaben zugrunde liegen, bestimmt die Steuereinheit 4, ob eine Erhöhung der internen Reibung vorliegt oder nicht. Bei einem Erkennen D einer Erhöhung der internen Reibung wird ebenfalls das Zusatzsteuersignal S2 erzeugt und an den Elektromotor 10 gesendet. Das Zusatzsteuersignal S2 dient dabei wiederum dazu, kleinste Bewegungen in dem Lenkgetriebe 8 auszulösen, die für den Fahrzeugnutzer nicht wahrnehmbar dazu beitragen, insbesondere durch mit den Bewegungen einhergehender Reibungswärme, ein Einfrieren des Lenkgetriebes 8 zu verhindern.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: elektromechanisches Lenksystem
- 2: Lenkwelle
- 3: Lenkhandhabe
- 4: Steuereinheit
- 5: Feedback-Aktuator
- 6: Elektromotors des Feedback-Aktuators
- 8: Lenkgetriebe
- 9: Lenksteller
- 10: Aktuatoreinheit / Elektromotor
- 11: Lenkritzel
- 12: Koppelelement
- 13: Spurstange
- 14: lenkbares Rad
- E#: Eingangssignale
- S#: Steuersignale
- S1: Steuersignal
- S2: Zusatzsteuersignal
- S3: erzeugtes Signal aus Steuersignal (S1) und Zusatzsteuersignal (S2)
- D: Erkennen des Vorliegens einer Erhöhung der internen Reibung
- T: Voraussetzung für das Erzeugen eines Zusatzsteuersignals (S2) als Testsignal für die Überwachung der internen Reibung

## Patentansprüche

1. Verfahren zum Betreiben eines elektromechanischen Lenksystems (1) mit einer Lenkwelle (2), über die mittels einer Lenkhandhabe (3) ein Lenkbefehl vorgegeben werden kann, und mit einem Lenkgetriebe (8), das einen Lenksteller (9) mit einer Aktuatoreinheit (10) und ein Koppelelement (12) aufweist, wobei zur Umsetzung eines Lenkbefehls in eine Lenkbewegung von lenkbaren Rädern (14) eines Kraftfahrzeugs ein Steuersignal (S1) an die Aktuatoreinheit (10) des Lenkstellers (9) gesendet wird, die Aktuatoreinheit (10) das empfangene Steuersignal (S1) in eine mechanische Bewegung des Lenkstellers (9) umsetzt, wobei der Lenksteller (9) auf das Koppelelement (12) einwirkt, und wobei eine interne Reibung des Lenkgetriebes (8) überwacht wird, **dadurch gekennzeichnet, dass** bei einem Erkennen einer Erhöhung der internen Reibung ein Zusatzsteuersignal (S2) an die Aktuatoreinheit (10) gesendet wird.

2. Verfahren nach Anspruch 1, **dadurch gekennzeichnet, dass** das Zusatzsteuersignal (S2) ergänzend zu dem Steuersignal (S1) an die Aktuatoreinheit (10) gesendet wird.

3. Verfahren nach einem der vorstehenden Ansprüche, **dadurch gekennzeichnet, dass** das Steuersignal (S1) mit dem Zusatzsteuersignal (S2) überlagert wird.

4. Verfahren nach einem der vorstehenden Ansprüche, **dadurch gekennzeichnet, dass** das Zusatzsteuersignal (S2) ein Bewegungssteuersignal ist, das von der Aktuatoreinheit (10) in eine für das Lenken des Kraftfahrzeugs einflussfreie mechanische Zusatzbewegung des Lenkstellers (9) umgesetzt wird.

5. Verfahren nach Anspruch 4, **dadurch gekennzeichnet, dass** die Zusatzbewegung geringer ist, als ein Spiel des Lenksystems (1).

6. Verfahren nach Anspruch 4 oder Anspruch 5, **dadurch gekennzeichnet, dass** die Zusatzbewegung geringer ist, als ein Spiel der Lenkhandhabe (3) des Lenksystems (1).

7. Verfahren nach einem der vorstehenden Ansprüche, **dadurch gekennzeichnet, dass** das Zusatzsteuersignal (S2) ein Drehmomentsteuersignal ist, das von der Aktuatoreinheit (10) in ein für das Lenken des Kraftfahrzeugs einflussfreies Zusatzdrehmoment des Lenkstellers (9) umgesetzt wird.

8. Verfahren nach einem der vorstehenden Ansprüche, **dadurch gekennzeichnet, dass** das Zusatzsteuersignal (S2) als Sinussignal und/oder Dreieckssignal und/oder Rechtecksignal bereitgestellt wird.

9. Verfahren nach einem der vorstehenden Ansprüche, **dadurch gekennzeichnet, dass** bei einem Einfrieren des Lenkgetriebes (8) auf eine Erhöhung der internen Reibung erkannt wird.

10. Verfahren nach einem der vorstehenden Ansprüche, **dadurch gekennzeichnet, dass** zur Überwachung der internen Reibung des Lenkgetriebes (8) bei einer Bewegung der Lenkhandhabe (3) das Verhalten der Aktuatoreinheit (10) ausgewertet wird.

11. Verfahren nach einem der vorstehenden Ansprüche, **dadurch gekennzeichnet, dass** das Zusatzsignal (S2) bei einer lenkbewegungsfreien Fahrt erzeugt wird, wobei zur Überwachung der internen Reibung des Lenkgetriebes (8) das Verhalten der Aktuatoreinheit (10) auf die Ansteuerung mittels des Zusatzsignals (S2) ausgewertet wird.

12. Verfahren nach einem der vorstehenden Ansprüche, **dadurch gekennzeichnet, dass** das Verhalten der Aktuatoreinheit (10) bezüglich einer Änderung eines von der Aktuatoreinheit (10) bereitgestellten Drehmoments unter Berücksichtigung einer dabei bewirkten Positionsänderung des Koppelelements (12) zur Überwachung der internen Reibung ausgewertet wird.

13. Elektromechanisches Lenksystem (1) mit einer Lenkwelle (2), über die mittels einer Lenkhandhabe (3) ein Lenkbefehl vorgegeben werden kann, und mit einem Lenkgetriebe (8), das einen mittels einer Aktuatoreinheit (10) antreibbaren Lenksteller (9) und ein Koppelelement (12) aufweist, wobei der Lenksteller (9) ausgebildet ist, zur Umsetzung eines Lenkbefehls in eine Lenkbewegung von lenkbaren Rädern (14) eines Kraftfahrzeugs gemäß einem empfangenen Steuersignal (S1) auf das Koppelelement (12) einzuwirken, **dadurch gekennzeichnet, dass** das Lenksystem (1) ausgebildet ist, nach einem Verfahren gemäß einem der vorstehenden Ansprüche betrieben zu werden.

14. Elektromechanisches Lenksystem (1) nach Anspruch 13, **gekennzeichnet durch** eine Steuereinheit (4), die eingerichtet ist, das Lenksystem (1) nach einem Verfahren gemäß einem der vorstehenden Verfahrensansprüche zu betreiben.

15. Elektromechanisches Lenksystem (1) nach Anspruch 13 oder Anspruch 14, **dadurch gekennzeichnet, dass** das elektromechanische Lenksystem (1) ein Steer-by-Wire-Lenksystem ist.
